# EUROPÄISCHE PATENTANMELDUNG

(11) **EP 2 392 751 A1**
(43) Veröffentlichungstag der Anmeldung: **07.12.2011**
(21) Anmeldenummer: 11004478.1
(22) Anmeldetag: 01.06.2011
(51) Int. Cl.: E04G 21/32, F24J 2/52, H01Q 21/06

(54) **Befestigungssystem und -verfahren auf Flachdächern**

(30) Priorität: 02.06.2010 DE 202010007537 U
(71) Anmelder: Duscher, Andreas, 80992 München (DE)
(72) Erfinder: Duscher, Andreas, 80992 München (DE)
(74) Vertreter: Beckord, Klaus

(57) **Zusammenfassung**

Ein Befestigungssystem für Absturzsicherungen (10), Photovoltaikanlagen, Satellitenschüsseln oder dergleichen, das auf einem im Wesentlichen flachen Dach (20) mit einer Flachdachabdichtung (22) anbringbar ist, mit einer Stütze (10) mit einem Steher (12), der im montierten Zustand aufrecht gerichtet ist und von der Dachfläche (20) absteht, mit einem Befestigungsfuß (14), mit dem der Steher (12) durchdringungsfrei auf der Flachdachabdichtung (22) montierbar ist, und der einen gegenüber dem Steher (12) in einem Winkel (α) und einen gegenüber der Dachebene weitgehend parallel verlaufenden Fußpunktausleger (16) umfasst, wird dadurch weitergebildet, dass der Fußpunktausleger (16) mit der Flachdachabdichtung (22) durch eine Befestigungsbahn (24) auf der Flachdachabdichtung (22) verklebbar ist, die den Fußpunktausleger (16) im montierten Zustand zumindest teilweise bedeckt und überlappt. Die Erfindung betrifft außerdem ein Befestigungsverfahren und eine Verwendung eines Textils und eines Flüssigkunststoffs in dem Verfahren.

## Beschreibung

Die Erfindung betrifft ein Befestigungssystem, das auf einem im Wesentlichen flachen Dach mit einer Flachdach-Abdichtung anbringbar ist, beispielsweise für Absturzsicherungen, Photovoltaikanlagen, Satellitenschüsseln oder dergleichen. Das System umfasst eine Stütze mit einem Steher als einem Befestigungspunkt, der in montiertem Zustand im Wesentlichen aufrecht gerichtet ist. Der Steher muss nicht zwingend senkrecht stehen, sondern kann unter Umständen auch geneigt oder gekrümmt verlaufen. Er steht von der Dachfläche des Flachdachs ab und trägt im montierten Zustand beispielsweise Geländerrohre, Photovoltaikmodule oder eine Satellitenschüssel. Die Stütze umfasst einen Befestigungsfuß, mit dem sie durchdringungsfrei auf der Flachdach-Abdichtung montierbar ist, und der einen Fußpunktausleger umfasst, der gegenüber dem Steher in einem Winkel und gegenüber der Dachebene weitgehend parallel verläuft. Das Befestigungssystem dient allgemein dem Zweck, Objekte in einem gewissen Abstand von der Dachebene eines Flachdaches fest mit dem zugehörigen Gebäude zu verbinden. Neben Absturzsicherungen können dazu auch Umwehrungen von Dachzugängen, Lichtkuppeln oder Oberlichtern, seitliche Begrenzungen von Rettungs- und Fluchtwegen, Abgrenzungen innerhalb von Dachgartenanlagen oder dergleichen gehören. Dazu können mehrere Stützen kettenartig miteinander verbunden sein. Eine Stütze muss nicht ausschließlich über ihren Fußpunkt am Dach befestigt sein, sondern kann darüber hinaus beispielsweise an einer Attika abgestützt sein.

Ein derartiges System ist beispielsweise unter der Bezeichnung "Barrial" der Firma "dani alu GmbH" auf dem Markt. Das bekannte Befestigungssystem verfügt über einen Fußpunktausleger von über einem Meter Länge, der auf der Seite des Befestigungsfußes mittels einer Fußmanschette an einer Fußleiste verschraubt wird, die ihrerseits an einer Attika befestigt ist. Das gegenüberliegende freie Ende des Fußpunktauslegers wird mit einem Gegengewicht von ca. 25 kg belastet, das das freie Ende des Fußpunktauslegers zuverlässig niederhält. Dadurch ist jegliche Durchdringung der empfindlichen Flachdach-Abdichtung vermieden.

Aufgabe der Erfindung ist es, die Befestigung eines Befestigungssystems auf Flachdächern zu vereinfachen.

Diese Aufgabe wird bei dem eingangs genannten Befestigungssystem dadurch gelöst, dass der Fußpunktausleger mit der Flachdach-Abdichtung (im Folgenden: Abdichtung) durch eine Befestigungsbahn verklebbar ist, die auf bzw. mit der Flachdachabdichtung verklebbar ist und die den Fußpunktausleger im montierten Zustand zumindest teilweise bedeckt und überlappt. Die Verklebung des Fußpunktauslegers auf der Abdichtung erfordert eine ausreichend große Kontaktfläche als Klebefläche zwischen dem Fußpunktausleger einerseits und der Abdichtung des Daches andererseits. Die Kontakt- und Klebefläche ist auf die zu erwartenden Belastungen zu bemessen. Sie muss ausreichend groß sein, um in Abhängigkeit von der Leistungsfähigkeit der Verklebung die in das Befestigungssystem eingeleiteten Kräfte auf die Abdichtung übertragen zu können. Die Verklebung bietet eine denkbar einfache Montage, deren Ausführung dem Montagepersonal bekannt ist und die daher in der erforderlichen Qualität ausgeführt werden kann. Die Befestigung durch Verklebung kann nahezu unsichtbar ausgeführt werden, insbesondere wenn das Flachdach eine Rollkiesschüttung, Begrünung oder eine andere Abdeckung der Abdichtung erhält. Durch den Fortfall einer Auflast bzw. eines Gegengewichts entfallen unter Umständen störende Aufbauten, die eine Begehung des Flachdachs erschweren können. Durch den Entfall der Auflast ist das Befestigungssystem insgesamt leichter, was insbesondere Transportkosten reduziert und die Montage erleichtert.

Grundsätzlich kann der Fußpunktausleger selbst über eine geeignete Kontaktfläche verfügen, über die er auf der Abdichtung verklebt werden kann. Dafür ist seine Aufstandfläche auf der Abdichtung entsprechend groß auszubilden, beispielsweise zu verlängern oder zu verbreitern. Nach einer vorteilhaften Ausgestaltung der Erfindung umfasst das Befestigungssystem jedoch mindestens eine Befestigungsbahn, die auf der Abdichtung verklebbar ist und die so bemessen ist, dass sie in montiertem Zustand über den Fußpunktausleger gelegt ihn quer zu seiner Längserstreckung und beidseits überlappt. Die Verklebung des Fußpunktauslegers und damit des Fußpunkts erfolgt erfindungsgemäß also durch eine indirekte Verklebung, indem die Befestigungsbahn den Fußpunktausleger weitgehend überdeckt und ihrerseits an der Abdichtung durch Verkleben befestigt ist. Zum einen lassen sich dadurch günstigere Verklebungspartner wählen, nämlich die Abdichtungsbahn einerseits und die Befestigungsbahn andererseits, auf deren Materialien der Kleber jeweils optimal abgestimmt werden kann. Denn dafür lässt sich regelmäßig ein geeigneterer Kleber finden als für zwei so unterschiedliche Klebepartner wie die Abdichtung einerseits und der regelmäßig metallene Fußpunktausleger andererseits. Zum anderen bietet diese Art der Befestigung große und variable Klebeflächen. Denn als Kontaktfläche steht nicht mehr diejenige des Fußpunktauslegers auf der Abdichtung zur Verfügung, sondern diejenige der Befestigungsbahn, soweit sie den Fußpunktausleger überlappt. Je nach Einsatzfall kann sie einfach variiert werden, indem die Größe der Befestigungsbahn variiert wird. Die mögliche Verklebungsfläche ist damit nicht auf den Fußpunktausleger beschränkt. Bei beengten Platzverhältnissen kann sie erforderlichenfalls auch zugeschnitten werden und ist daher sehr anpassbar. Die vorgeschlagene Befestigung mittels Befestigungsbahn erfordert darüber hinaus ein relativ geringes handwerkliches Können, stellt also eine einfache Befestigungsmöglichkeit dar. Die dafür erforderlichen Werkzeuge und Materialien sind bereits bekannt und erhältlich, so dass die erfinderische Befestigung keine Sonderanfertigungen und keine speziellen Fertigkeiten erfordert. Die Befestigungsbahn kann beispielsweise aus dem gleichen Material wie die Abdichtung des Flachdachs bestehen bzw. eine Abdichtungsbahn sein, die auf der materialgleichen Abdichtung problemlos verklebt werden kann.

Absturzsicherungen und Umwehrungen stützen sich regelmäßig an Gebäudekanten, wie beispielsweise Attiken, Überzügen oder dergleichen zusätzlich ab. Diese Abstützungen erfordern einen zusätzlichen Montageaufwand, der Kosten und Zeit erfordert. Nach einer vorteilhaften Ausgestaltung der Erfindung verfügt das Befestigungssystem am Befestigungsfuß über mehrere Fußpunktausleger. Sie erstrecken sich günstigerweise in im Wesentlichen entgegen gesetzte Richtungen, so dass beispielsweise zwei Fußpunktausleger einander gegenüberliegend am Befestigungsfuß angebracht sind und eine gemeinsame Längsachse teilen. Drei Fußpunktausleger stehen günstigerweise in einem Winkel untereinander von 60° vom Befestigungsfuß ab, sofern der zugehörige Steher vollkommen freistehend auf einem Flachdach befestigt werden soll. Mehrere Fußpunktausleger können allerdings auch bei einer zusätzlichen Befestigung des Fußpunkts an einer Gebäudekante sinnvoll sein, beispielsweise für einen Steher an einer einspringenden Ecke einer Absturzsicherung für ein Flachdach. Eine Mehrzahl an Fußpunktauslegern verleiht dem Befestigungsfuß eine höhere Stabilität, und zwar nicht nur durch die zusätzliche Kontakt- bzw. Klebefläche mit dem Flachdach, sondern auch durch eine Abstützung in mehrere verschiedene Richtungen.

Die Abmessungen der Befestigungsbahn bestimmen also die Größe der Klebeflächen und damit zu einem wesentlichen Anteil die Leistungsfähigkeit des Befestigungssystems. Nach einer weiteren vorteilhaften Ausgestaltung der Erfindung entsprechen die Abmessungen der Befestigungsbahn weitgehend der Abmessung des Fußpunktauslegers in seiner Längserstreckung. Die Befestigungsbahn überlappt damit den Fußpunktausleger nur entlang seiner Langseiten und nicht an seiner kurzen Seite an seinem freien Ende. Sein freies Ende kann in montiertem Zustand vorteilhafterweise sogar frei bleiben, um die korrekte Montage des Befestigungssystems auf der Abdichtung leichter nachvollziehen und überprüfen zu können. Außerdem wird die Befestigungsbahn bei der erfindungsgemäßen Montage beim Überspannen des Fußpunktauslegers lediglich in einer Richtung gefalzt, wodurch sich eine definierte ebene Auflage der Befestigungsbahn auf der Abdichtung ohne sich kreuzende oder im Winkel aufeinander zulaufende Falze ergibt. Die ebene Auflage der Befestigungsbahn in ihren Überlappungsbereichen sorgt für eine korrekte blasen- und faltenfreie Verklebung auf der Abdichtung.

Die eingangs genannte Aufgabe wird außerdem dadurch gelöst, dass bei dem eingangs genannten Befestigungssystem die Befestigungsbahn ein stabiles Textil umfasst, beispielsweise ein Geotextil, jedenfalls ein Gewebe, Gelege oder Gewirke oder Kombinationen daraus, das reißfest, mit Flüssigkunststoff tränkbar und dadurch auf der Abdichtung verklebbar ist. Unter dem Textil ist folglich ein flächiges, durchlässiges bzw. porörses und flexibles Gebilde zu verstehen, das ein gewisses Luftvolumen einschließt, das sich durch den Flüssigkunststoff verdrängen lässt. Das Textil sollte vorzugsweise eine Reißfestigkeit von wenigstens 0,9 kN/5cm, vorzugsweise zwischen 1,0 und 1,3 kN/5cm und eine Reißdehnung von etwa 20 bis höchstens 40 % aufweisen. Nach dieser Befestigungsmethode wird ein Halbzeug, nämlich das Textil, durch den Flüssigkunststoff auf der Baustelle erst zur Befestigungsbahn ergänzt. Der Flüssigkunststoff erfüllt eine Doppelfunktion, nämlich die Ergänzung eines Textils zu einer Befestigungsbahn einerseits und deren Verklebung auf der Abdichtung andererseits. Das hat den Vorteil, dass die korrekte Montage des Befestigungssystems auf der Abdichtung leichter überprüft werden kann. Denn nur, wenn das Textil vollflächig mit Flüssigkunststoff getränkt ist, erhält es seine vollflächige Stabilität und wird dadurch zu einer Befestigungsbahn. Seine vollflächige Durchtränkung stellt darüber hinaus sicher, dass das Textil auch vollflächig mit der Abdichtung verklebt ist. Eine undurchsichtige Abdichtungsbahn dagegen kann auf ihre vollflächige Verklebung mit der Abdichtung des Flachdachs kaum überprüft werden.

Nach einer weiteren vorteilhaften Ausgestaltung der Erfindung ist der Flüssigkunststoff eingefärbt. Er hat erfindungsgemäß eine konkrete Farbgebung, die sich lediglich von der Farbe der Abdichtung des Flachdachs unterscheiden muss. Dabei kann es genügen, dass es sich dabei um deutlich wahrnehmbare Nuancen derselben Grundfarbe handelt. Eine Einfärbung im Sinne der Erfindung kann bereits darin bestehen, dass der Flüssigkunststoff eine wahrnehmbar hellere Tönung aufweist als es diejenige der Abdichtung des Flachdachs. Ist die Abdichtung beispielsweise standardgemäß dunkelgrau, so kann der Flüssigkunststoff hellgrau gefärbt sein, um diesen Zweck zu erfüllen. Er erleichtert es durch die Farbabweichung, dass die korrekte Montage, insbesondere die ausreichende Durchtränkung des Textils mit Flüssigkunststoff, optisch einfach überprüft werden kann.

Viele Abdichtungen für Flachdächer basieren auf Bitumen oder einer PVC-Basis. Nach einer vorteilhaften Ausgestaltung der Erfindung basiert der Flüssigkunststoff des Befestigungssystems auf Polyester-, Polyurethan- oder Methylmethacrylat-Harzen, um mit Flachdach-Abdichtungen auf Bitumen- oder PVC-Basis zu harmonieren. Ein derartiger Flüssigkunststoff wird beispielsweise unter der Marke Widopan^{®} angeboten und ist für diesen Einsatzzweck geprüft und bewährt. Einer zuverlässigen Anwendung des erfinderischen Befestigungssystems steht damit nichts im Wege.

Die Befestigungsbahn überlappt den Fußpunktausleger, um ihn auf der Abdichtung zu befestigen. Da das Befestigungssystem im Einsatz durchaus mechanischen Beanspruchungen unterliegt, werden die daraus entstehenden Kräfte über den Steher auch in den Fußpunkt eingeleitet. Dort müssen sie vom Fußpunktausleger über die Befestigungsbahn auf die Flachdach-Abdichtung übertragen werden. Der Fußpunktausleger stellt also mit seinen Kontaktflächen gegenüber der Befestigungsbahn Kraftübertragungsflächen dar, an denen die mechanischen Kräfte vom metallischen Fußpunktausleger auf die kunststoffbasierte Befestigungsbahn übertragen werden. Nach einer weiteren vorteilhaften Ausgestaltung der Erfindung weist daher der Fußpunktausleger einen im Wesentlichen halbkreisförmigen oder kreissegmentförmigen Querschnitt auf. Diese Gestaltung entspricht weitgehend dem Verlauf der Befestigungsbahn an ihrer Kontaktfläche zum Fußpunktausleger. Sie vermeidet damit Ecken oder Kanten, die zu einer hohen punktuellen oder linearen Belastung der Befestigungsbahn führen könnten. Verbleibende Kanten, beispielsweise die Längskanten an der Auflagefläche des Fußpunktauslegers auf der Abdichtung, sind günstigerweise und aus dem gleichen Grund gerundet. Damit wird für eine lange Lebensdauer des Befestigungssystems bzw. seiner Befestigung auf der Abdichtung trotz mechanischer Belastungen gesorgt.

Nach einer weiteren vorteilhaften Ausgestaltung der Erfindung liegt der Fußpunktausleger nicht unmittelbar und direkt auf der Abdichtung auf. Vielmehr ist zwischen dem Fußpunktausleger und der Abdichtung eine Zwischenlage als Scheuer- und Durchstanzschutz für die Abdichtung angebracht, die im Übrigen aber an der Befestigung des Fußpunktauslegers auf der Abdichtung nicht teilnimmt. Als Zwischenlage kann eine herkömmliche Bautenschutzmatte dienen, die beispielsweise aus Gummigranulat bestehen kann. Sie schützt die Flachdach-Abdichtung nicht nur gegenüber dynamischen Lasten aus dem Fußpunkt des Befestigungssystems, sondern sorgt auch für eine beschädigungsfreie Einleitung der statischen Lasten des Befestigungssystems und vor allem der daran angebrachten Objekte, wie beispielsweise Solarmodule. Alternativ oder zusätzlich kann der Fußpunktausleger unter dem Fußpunkt und an seinem freien Ende einen Schuh beispielsweise als Kunststoff-Formteil tragen, der auf den Fußpunktausleger aufsteckbar ist.

Nach einer weiteren vorteilhaften Ausgestaltung der Erfindung sind an der Stütze Befestigungseinrichtungen angebracht, an denen im Wesentlichen waagrecht verlaufende Geländerrohre, Module einer Photovoltaikanlage oder Satellitenschüssein montierbar sind. Damit lässt sich das erfindungsgemäße Befestigungssystem zu einem zusammenhängenden System aus mehreren kettenartig untereinander verbundenen Befestigungspunkten formen. Es kann als Befestigungsgerüst für Photovoltaikelemente oder als Geländersystem einer Absturzsicherung dienen. Als Absturzsicherung bietet es aufgrund einer Vielzahl möglicher Befestigungspunkte eine hohe Sicherheit, weil selbst bei einem unwahrscheinlichen Versagen eines Befestigungspunkts im Belastungsfall deren kettenartige Verbindung untereinander zu einer Lastverteilung führt, die ein Systemversagen der Absturzsicherung insgesamt ausschließt.

Die eingangs genannte Aufgabe wird außerdem durch ein Verfahren zum Befestigen einer Absturzsicherung, Photovoltaikanlage, Satellitenschüssel oder dergleichen mit einem oder mehreren Befestigungspunkten auf einem Flachdach gelöst, insbesondere zum Befestigen des oben beschriebenen Systems, mit den folgenden Schritten:
a) Positionieren eines Fußpunktauslegers oder dergleichen des Befestigungspunkts auf dem Flachdach bzw. der Abdichtung an dem vorgesehenen Montageort,
b) Bedecken und Überlappen des Fußpunktauslegers mit einem Textil, so dass das Textil neben dem Fußpunktausleger einen ausreichenden Bereich der Abdichtung bedeckt, und
c) Tränken des Textils mit einem Flüssigkunststoff, so dass einerseits das Textil mit Flüssigkunststoff gefüllt ist, und der Flüssigkunststoff andererseits einen Klebeverbindung zwischen dem Textil und der Abdichtung herstellt.

Der Flüssigkunststoff ergänzt also das Textil, das ein Halbzeug bildet, zu einer nach seinem Aushärten voll belastbaren Befestigungsbahn. Dafür ist es erforderlich, dass das Textil durchlässig ist, so dass der Flüssigkunststoff in das Textil nicht nur eindringen, sondern es auch durchdringen kann. Nur dann kann der Flüssigkunststoff zusätzlich eine möglichst vollflächige Klebeverbindung zur Abdichtung herstellen, wofür er in ausreichender Menge auf das Textil aufgebracht werden muss.

Die eingangs genannte Aufgabe wird außerdem durch die Verwendung eines flächigen, durchlässigen und flexiblen Textils und eines Flüssigkunststoffs zum Befestigen einer Absturzsicherung, Photovoltaikanlage, Satellitenschüssel oder dergleichen mit einem oder mehreren Befestigungspunkten auf einem Flachdach in dem oben beschriebenen Verfahren gelöst, insbesondere zum Befestigen des oben beschriebenen Systems. Der Flüssigkunststoff ist in der oben beschriebenen Weise sowohl auf das Textil als auch auf die Abdichtung abgestimmt, so dass es jedenfalls mit der Abdichtung eine belastbare Klebeverbindung eingeht.

Das Prinzip der Erfindung wird im Folgenden anhand der Zeichnung beispielshalber noch näher erläutert. In der Zeichnung zeigen:
- Figur 1:: Das Befestigungssystem in einer Schnittansicht,
- Figur 2:: das Befestigungssystem in einer Frontalansicht, und
- Figur 3:: eine räumliche Darstellung des Befestigungssystems.

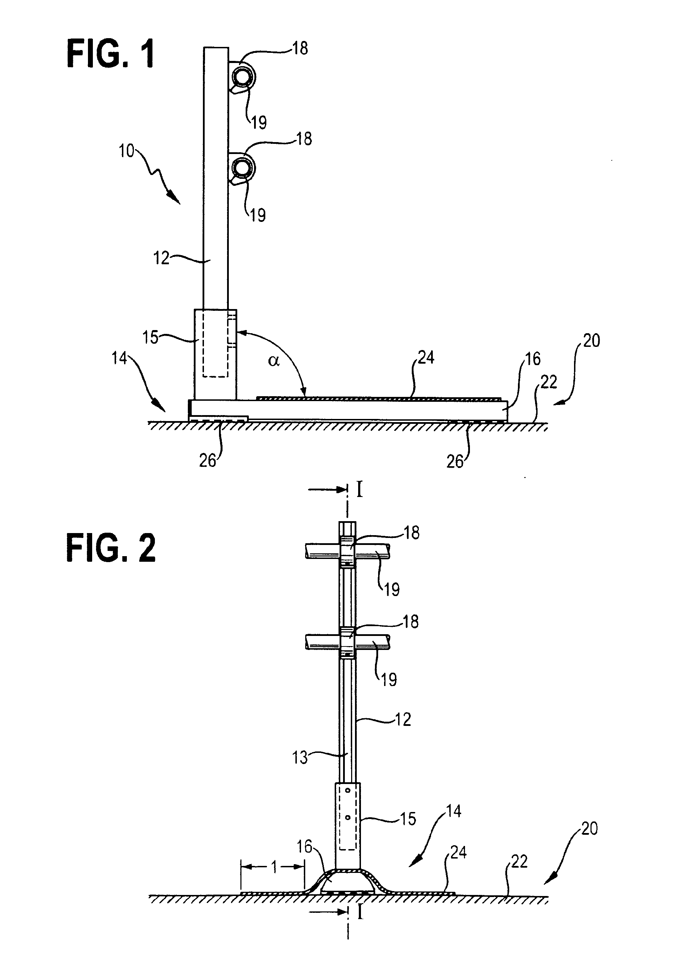

Figur 1 zeigt in einer Schnittansicht das Befestigungssystem mit einer Stütze 10 als einem einzelnen Befestigungspunkt, die auf einer Dachfläche 20 aufgesetzt ist. Die Dachfläche 20 trägt eine vollflächige Flachdach-Abdichtung 22, auf der die Stütze 10 zunächst lose aufgestellt ist. Sie besteht aus einem senkrecht aufragenden Steher 12, der in einem Befestigungsfuß 14 mit einem waagrecht und damit parallel zur Dachfläche 20 verlaufenden Fußpunktausleger 16 lösbar gekoppelt ist. Der Steher 12 und der Fußpunktausleger 16 schließen damit einen rechten Winkel α ein. Der Steher 12 ist in einem Köcher 15 des Befestigungsfußes 14 eingesteckt und dort verschraubt. Der Köcher 15 ist untrennbar mit dem Fußpunktausleger 16 verbunden, der sich etwa einen Meter lang über die Abdichtung 22 erstreckt. Der Steher 12 ist als Profilschiene ausgebildet, die auf ihrer Schmalseite eine über ihre gesamte Höhe längs verlaufende Nut 13 aufweist, in der Geländerhalter als Befestigungseinrichtungen 18 eingeschraubt sind (vgl. Figur 2). Sie nehmen waagrecht verlaufende Geländerrohre 19 auf, die an mehreren Stehern 12 befestigt sind und so ein durchgängiges Geländer als Befestigungssystem mit mehreren kettenartig verbundenen Befestigungspunkten bzw. Stützen 10 ausbilden.

Der Fußpunktausleger 16 liegt nicht unmittelbar auf der Abdichtung 22 auf, sondern ruht an beiden Enden, also an demjenigen, an dem der Befestigungsfuß 14 anschließt, und an seinem gegenüberliegenden freien Ende auf Zwischenlagen 26 aus Gummigranulat. Die Zwischenlagen sind etwa quadratisch zugeschnitten und haben eine Seitenlänge entsprechend der Breite des Fußpunktauslegers 16, also zum Beispiel 10 x 10 cm. Sie sind so dick, dass sie sich auch unter einer Belastung des Befestigungssystems 10 nicht soweit komprimieren, dass der Fußpunktausleger 16 in Kontakt mit der Abdichtungsbahn 22 tritt. Sie fungieren quasi als Abstandhalter zwischen dem metallischen Fußpunktausleger 16 und der Oberfläche der Abdichtungsbahn 22.

Wie vor allen Dingen in Figur 2 zu erkennen ist, überlappt eine Befestigungsbahn 24 den Fußpunktausleger 16 auf nahezu seiner gesamten Länge. Die Befestigungsbahn 24 hat daher eine Breite, die etwas geringer ist als die Länge des Fußpunktauslegers 16. In ihrer Längsrichtung ist die Befestigungsbahn 24 so bemessen, dass sie den Fußpunktausleger 16 beidseitig um das Maß A überlappt. Die Überlappung bildet eine Kontaktfläche zwischen der Befestigungsbahn 24 und der Abdichtung 22 und damit die maßgebliche Klebefläche, deren Größe auf die Belastbarkeit der Stütze 10 entscheidenden Einfluss hat. Je nach Größe der zu erwartenden Belastung auf die Stütze 10 kann die Breite A der Überlappung größer oder kleiner gewählt werden und so die Leistungsfähigkeit des Befestigungssystems an die auftretenden Belastungen angepasst werden.

Die Befestigungsbahn 24 lässt den Fußpunktausleger 16 im Bereich des Befestigungsfußes 14 und an seinem gegenüberliegenden freien Ende frei. Dadurch liegt sie nur eindimensional gefalzt über dem Fußpunktausleger 16, so dass sie faltenfrei auf der Abdichtung 22 aufliegt und nur in einer Richtung, nämlich in Richtung der Längserstreckung des Fußpunktauslegers 16, gefalzt ist. Die eindimensionale Falzung ermöglicht die satte und ebene Auflage der Befestigungsbahn 24 auf der Abdichtung 22. Für eine ebenfalls glatte und ebene Auflage auf dem Fußpunktausleger 16 sorgt dessen Querschnitt, der sich weitgehend dem stetigen und knickfreien Verlauf der Befestigungsbahn 24 anpasst. Die Flanken bzw. Längskanten des Fußpunktauslegers 16 sind daher kreissegmentförmig ausgebildet und gehen mit einer Ausrundung in eine oberseitige Abflachung über, wie in Figur 2 zu erkennen ist. An diese Querschnittsform des Fußpunktauslegers 16 kann sich die Befestigungsbahn 24 besonders gut anschmiegen, ohne im Belastungsfall punktuelle oder lineare Belastungsspitzen aushalten zu müssen.

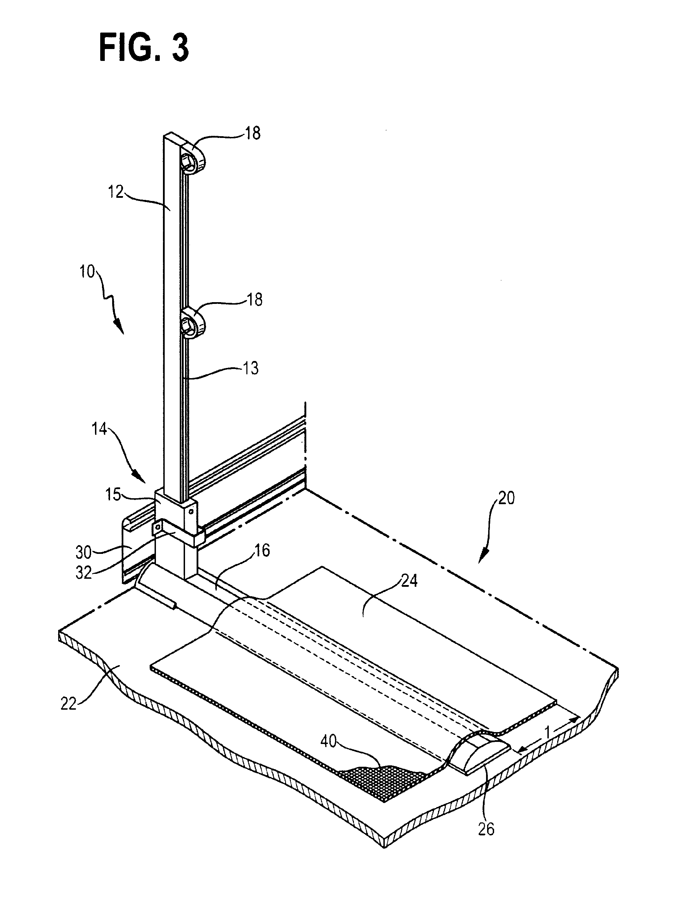

Figur 3 zeigt in einer perspektivischen Ansicht die Stütze 10, wie sie zusätzlich an einer nicht dargestellten Attika befestigt wird. An einer senkrecht aufsteigenden Seitenwand der Attika ist eine metallische Fußleiste 30 befestigt, an der eine Fußmanschette 32 verschraubt werden kann. Die Fußmanschette 32 umgreift den Befestigungsfuß 14 dreiseitig und fixiert ihn mit seiner freibleibenden vierten Seite in Anlage an die Fußleiste 30. Dadurch erhält die Stütze 10 eine zusätzliche Stabilität gegen Verkipppen, so dass der Fußpunktausleger 16 keine Momentenbelastung auf die Befestigungsbahn 24 übertragen kann.

Die Befestigungsbahn 24 in Figur 3 veranschaulicht an einer ihrer vier Ecken exemplarisch ihren Aufbau: sie besteht aus einem Polyestergittervlies 40 als Textil mit einem Flächengewicht von ca. 225 g/m², einer Reißfestigkeit von ca. 1,25 kN/5cm in Längsrichtung und ca. 1,0 kN/5cm in Querrichtung und einer Maschenweite von ca. 1 mm x 1 mm. Es ist hochreißfest und witterungs- bzw. UV-beständig. Zur Befestigung des Fußpunktauslegers 16 der Stürze 10 auf der Abdichtung 22 wird es mit seinen Überlappungen der Breite A über den Fußpunktausleger 16 gelegt. Dabei ist auf eine faltenfreie und ebene Auflage der Überlappungsbereiche auf der Abdichtung 22 zu achten. Anschließend wird das Gittervlies 40 der Befestigungsbahn 24 mit Flüssigkunststoff vollständig getränkt, indem er auf das Gittervlies 40 aufgegossen wird. Das Gittervlies 40 dient der Definition der Schichtdicke des Flüssigkunststoffs und erhöht die Reißfestigkeit der Befestigung erheblich. Der Flüssigkunststoff füllt das Gittervlies 40 vollständig, umfließt den Fußpunktausleger 16 und bedeckt die Abdichtungsbahn 22 unter den Überlappungsbereichen der Befestigungsbahn 24 vollständig. Er ist mit Pigmenten eingefärbt, um die vollständige Durchtränkung des andersfarbigen Gittervlieses 40 überprüfen zu können und sich farblich von der Abdichtungsbahn 22 abzuheben. Dadurch lässt sich die vollständige Durchtränkung und Füllung des Gittervlieses 40 überprüfen. Anschließend härtet der Flüssigkunststoff aus, bildet zusammen mit dem Gittervlies 40 die Befestigungsbahn 24 und verklebt sie zugleich mit der Abdichtung 22. Dadurch ist der unter der Befestigungsbahn 24 eingeschlossene Fußpunktausleger 16 auf nahezu seiner gesamten Länge mit der Abdichtung 22 unlösbar verbunden.

Da es sich bei dem vorhergehenden, detailliert beschriebenen Befestigungssystem um ein Ausführungsbeispiel handelt, kann es in üblicher Weise vom Fachmann in einem weiten Umfang modifiziert werden, ohne den Bereich der Erfindung zu verlassen. Insbesondere können die konkreten Ausgestaltungen des Fußpunktauslegers in anderer Form als in der hier beschriebenen nach den Marktangeboten und -erfordernissen erfolgen. Ebenso kann die Befestigungsbahn in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 10: Stütze
- 12: Steher
- 13: Nut
- 14: Befestigungsfuß
- 15: Köcher
- 16: Fußpunktausleger
- 18: Befestigungseinrichtung
- 19: Geländerrohr
- 20: Flachdachabdichtung
- 22: Abdichtung
- 24: Befestigungsbahn
- 26: Zwischenlage
- 30: Fußleiste
- 32: Fußmanschette
- 40: Gittervlies
- A: Überlappungsbreite
- α: Winkel zwischen Steher 12 und Fußpunktausleger 16

## Patentansprüche

1. Befestigungssystem für Absturzsicherungen (10), Photovoltaikanlagen, Satellitenschüsseln oder dergleichen, das auf einem im Wesentlichen flachen Dach (20) mit einer Flachdachabdichtung (22) anbringbar ist, mit einer Stütze (10) mit einem Steher (12), der im montierten Zustand aufrecht gerichtet ist und von der Dachfläche (20) absteht, mit einem Befestigungsfuß (14), mit dem der Steher (12) durchdringungsfrei auf der Flachdachabdichtung (22) montierbar ist, und der einen gegenüber dem Steher (12) in einem Winkel (α) und einen gegenüber der Dachebene weitgehend parallel verlaufenden Fußpunktausleger (16) umfasst, **dadurch gekennzeichnet, dass** der Fußpunktausleger (16) mit der Flachdachabdichtung (22) durch eine Befestigungsbahn (24) verklebbar ist, die auf der Flachdachabdichtung (22) verklebbar ist und die den Fußpunktausleger (16) im montierten Zustand zumindest teilweise bedeckt und überlappt.

2. System nach Anspruch 1, **gekennzeichnet durch** mehrere Fußpunktausleger (16) am Befestigungsfuß (14) einer Stütze.

3. System nach Anspruch 1 oder 2, **dadurch gekennzeichnet, dass** die Befestigungsbahn (24) so bemessen ist, dass sie im montierten Zustand den Fußpunktausleger (16) quer zu seiner Längserstreckung beidseits überlappt.

4. System nach einem der obigen Ansprüche, **gekennzeichnet durch** eine Abmessung der Befestigungsbahn (24), die der Abmessung des Fußpunktauslegers (16) in Richtung seiner Längserstreckung weitgehend entspricht.

5. System zur Befestigung auf Flachdächern, mit einem Steher (12), der im montierten Zustand aufrecht gerichtet von der Dachfläche (20) absteht, mit einem Befestigungsfuß (14), mit dem der Steher (12) durchdringungsfrei auf der Flachdachabdichtung (22) montierbar ist, und der einen gegenüber dem Steher (12) in einem Winkel (α) und einen gegenüber der Dachebene weitgehend parallel verlaufenden Fußpunktausleger (16) umfasst, und mit einer Befestigungsbahn (24), die auf der Flachdachabdichtung (22) verklebbar ist und die den Fußpunktausleger (16) im montierten Zustand zumindest teilweise bedeckt und überlappt, insbesondere nach einem der obigen Ansprüche, **gekennzeichnet durch** ein Textil (40) als Befestigungsbahn (24), das mit Flüssigkunststoff tränkbar und **dadurch** zugleich auf der Abdichtung (22) verklebbar ist.

6. System nach dem obigem Anspruch, **gekennzeichnet durch** einen farbigen Flüssigkunststoff.

7. System nach einem der obigen Ansprüche für den Einsatz auf Flachdachabdichtungen (22) auf Bitumen- oder PVC-Basis, **gekennzeichnet durch** einen Flüssigkunststoff auf der Basis von Polyester-, Polyurethan- oder Methylmethacrylat-Harzen.

8. System nach einem der obigen Ansprüche, **gekennzeichnet durch** einen im Wesentlichen halbkreisförmigen oder kreissegmentförmigen Querschnitt des Fußpunktauslegers (16).

9. System nach einem der obigen Ansprüche, **gekennzeichnet durch** eine Zwischenlage (26) zwischen dem Fußpunktausleger (16) und der Abdichtung (22).

10. System nach einem der obigen Ansprüche, **gekennzeichnet durch** Befestigungseinrichtungen (18) am Steher (12), an denen im Wesentlichen waagrecht verlaufende Geländerrohre (19), Module einer Photovoltaikanlage oder Satellitenschüsseln montierbar sind.

11. System nach obigem Anspruch, **gekennzeichnet durch** eine kettenartige Verbindung mehrerer Stützen (10) mittels Geländerrohren (19).

12. Verfahren zum Befestigen einer Absturzsicherung, Photovoltaikanlage, Satellitenschüssel oder dergleichen mit einem oder mehreren Befestigungspunkten auf einem Flachdach, insbesondere zum Befestigen eines Systems nach einem der obigen Ansprüche, mit den folgenden Schritten:
a) Positionieren eines Fußpunktauslegers oder dergleichen des Befestigungspunkts auf dem Flachdach,
b) Bedecken und Überlappen des Fußpunktauslegers mit einem Textil
c) Tränken des Textils mit einem Flüssigkunststoff.

13. Verwendung eines flächigen, durchlässigen und flexiblen Textils und eines Flüssigkunststoffs zum Befestigen einer Absturzsicherung, Photovoltaikanlage, Satellitenschüssel oder dergleichen mit einem oder mehreren Befestigungspunkten auf einem Flachdach in einem Verfahren nach obigem Anspruch, insbesondere zum Befestigen eines Systems nach einem der obigen Vorrichtungsansprüche.
